# FASCICULE DE BREVET EUROPEEN

(11) **EP 4 164 947 B1**
(45) Date de publication et mention de la délivrance du brevet: **08.04.2026**
(21) Numéro de dépôt: 21730244.7
(22) Date de dépôt: 10.06.2021
(51) Int. Cl.: B64C 25/34, B64C 25/32, B64C 25/60

(54) **ATTERRISSEUR D'AERONEF DOTÉ D'AU MOINS UNE ROUE MOTORISÉE**
FAHRWERK EINES LUFTFAHRZEUGS, DAS MIT MINDESTENS EINEM MOTORISIERTEN RAD AUSGESTATTET IST
AIRCRAFT LANDING GEAR PROVIDED WITH AT LEAST ONE MOTORISED WHEEL

(30) Priorité: 10.06.2020 FR 2006056
(43) Date de publication de la demande: 19.04.2023
(73) Titulaire: Safran Landing Systems, 78140 Vélizy-Villacoublay (FR)
(72) Inventeur: DUBOIS, Sébastien, 77550 MOISSY-CRAMAYEL (FR); HENRION, Philippe, 77550 MOISSY-CRAMAYEL (FR); FORTIER, Florent, 77550 MOISSY-CRAMAYEL (FR)
(74) Mandataire: Cabinet Boettcher
(86) Numéro de dépôt international: PCT/EP2021/065620
(87) Numéro de publication internationale: WO 2021/250169

(56) Documents cités:
- EP-A1- 0 631 929
- EP-A1- 1 106 501
- EP-A2- 2 246 253
- WO-A1-99/47416
- GB-A- 2 572 161
- US-A1- 2013 068 884
- US-A1- 2016 096 620

## Description

La présente invention se rapporte au domaine des atterrisseurs d'aéronefs dotés d'au moins une roue motorisée et d'au moins une roue freinée.

### ARRIERE PLAN DE L'INVENTION

Le document brevet FR3072943A1 décrit un atterrisseur doté d'une partie haute destinée à être assemblée avec une structure de l'aéronef et une partie basse équipée d'un bogie formant un balancier et de deux essieux portés aux extrémités de ce bogie.

Cet atterrisseur comporte une jambe reliant la partie haute et la partie basse. Les deux essieux de l'atterrisseur sont perpendiculaires au bogie.

L'essieu avant étant équipé d'une pluralité de roues freinées et l'essieu arrière étant équipé d'au moins une roue motorisée pour permettre l'évolution de l'aéronef au sol (taxiage ou plus couramment « taxiing »). Chaque roue motorisée est ainsi agencée pour transmettre au sol des efforts de manœuvre et chaque roue freinée est agencée pour transmettre au sol des efforts de freinage.

Un actionneur amortisseur est relié d'une part au bogie et d'autre part à la jambe pour orienter ce bogie selon un mouvement de tangage et ainsi simultanément déplacer les roues freinées et motorisées. La répartition des efforts entre les roues freinées à l'avant et les roues motorisées à l'arrière est difficilement maitrisable avec ce seul actionneur amortisseur couplé au bogie et chaque roue motorisée est susceptible de subir des accélérations provocant des chocs importants pendant les phases de décollage et d'atterrissage ce qui nécessite de prendre des marges importantes sur son dimensionnement. Un atterrisseur est aussi connu du document US2016/009620A1.

### OBJET DE L'INVENTION

Un objet de la présente invention est de proposer un atterrisseur permettant de limiter le risque d'endommagement de roue motorisée au moment des phases de décollage ou d'atterrissage.

### RESUME DE L'INVENTION

A cet effet, l'invention concerne un atterrisseur d'aéronef présentant une partie haute destinée à être assemblée à une structure de l'aéronef et une partie basse munie de premier et deuxième essieux, le premier essieu étant équipé d'au moins une roue freinée et le deuxième essieu étant équipé d'au moins une roue motorisée.

L'atterrisseur selon ce premier aspect de l'invention est détaillé dans la revendication 1.

Grâce à l'invention, pendant toutes les phases de roulage de l'aéronef sur le plan de roulement, on est certain que l'aéronef est au moins porté par la / les roues freinées équipant le premier essieu alors que chaque roue motorisée équipant le deuxième essieu peut être sélectivement déplacée vis-à-vis du plan de roulement par le premier actionneur.

Tant que les conditions de roulage ne permettent pas une mise en contact de la roue motorisée sur le plan de roulement (par exemple parce que l'aéronef se déplace à grande vitesse), on peut maintenir un écart entre la roue motorisée et le plan de roulement, seule une roue freinée pouvant venir en contact contre le plan de roulement.

Lorsque les conditions de roulage le permettent, on peut décider d'actionner le premier actionneur pour mettre en contact contre le plan de roulement chaque roue motorisée équipant le deuxième essieu en plus de chaque roue freinée équipant le premier essieu.

Pour la compréhension de l'invention :
- une roue freinée est une roue mécaniquement couplée avec un frein pour appliquer un couple s'opposant à la rotation de cette roue freinée par rapport à l'essieu équipé de cette roue freinée (en l'occurrence le premier essieu) ; et
- une roue motorisée est une roue mécaniquement couplée à un moteur destiné à sélectivement appliquer un couple moteur entraînant la rotation de cette roue motorisée par rapport à l'essieu équipé de cette roue motorisée (en l'occurrence le deuxième essieu).

Pendant les phases d'atterrissage, décollage ou de roulage à grande vitesse, chaque roue motorisée de l'atterrisseur selon l'invention peut être maintenue à l'écart du plan de roulement.

Ainsi, grâce à l'invention, il est possible d'éviter que la roue motorisée ne soit soumise à un impact contre le plan de roulement au moment de l'atterrissage ou qu'elle soit soumise à une trop grande vitesse de rotation lors du roulage.

La roue motorisée peut ainsi être protégée contre les accélérations ou chocs de fortes intensités.

L'invention permet aussi de se dispenser de moyen de débrayage de la roue motorisée vis-à-vis du moteur puisque l'on peut choisir les conditions de vitesse aéronef requises pour mettre en contact la roue motorisée contre le sol.

La taille de la roue motorisée peut être adaptée au seul besoin de manœuvrer l'aéronef (tracter ou pousser l'aéronef.

L'ensemble roue motorisée / pneu et toute la chaîne cinématique entre cette roue et le moteur est soumis à des vitesses et des efforts beaucoup plus faibles que les roues freinées, ce qui permet de réduire les risques d'endommagement de roue motorisée.

Le fait de pouvoir éloigner la roue motorisée vis-à-vis du plan de roulement pendant des phases de freinage permet de ne pas dégrader la performance de freinage.

Il est également envisageable que le déplacement de chaque au moins une roue motorisée par le premier actionneur soit synchronisé avec la vitesse avion avec une précision relâchée par rapport à la précision normalement requise pour gérer un embrayage de roue motorisée avec son moteur. L'erreur de transmission peut être reprise par la flexibilité et le glissement du pneumatique de chaque roue motorisée.

Un autre avantage de l'atterrisseur selon l'invention est qu'il peut être installé en option sur un atterrisseur existant d'aéronef en lui ajoutant une roue motorisée et un premier actionneur permettant de la déplacer par rapport à la partie haute de l'atterrisseur sans déplacer la roue freinée.

Selon un mode de réalisation préféré, le premier actionneur est agencé pour déplacer le deuxième essieu entre la position éloignée et la position rapprochée vis-à-vis de ladite partie haute indépendamment du premier essieu.

Le premier essieu est équipé d'au moins une roue freinée et n'est équipé d'aucune roue motorisée (toute roue équipant le premier essieu est une roue freinée).

Le deuxième essieu est équipé d'au moins une roue motorisée et n'est équipé d'aucune roue freinée (Toute roue équipant le deuxième essieu est une roue motorisée).

L'invention concerne également un aéronef comportant au moins un atterrisseur selon l'un quelconque des modes de réalisation d'atterrisseur selon l'invention. Cet aéronef est agencé pour sélectivement adopter des première et seconde configurations d'aéronef distinctes l'une de l'autre.

Dans la première configuration d'aéronef ladite au moins une roue freinée équipant le premier essieu et ladite au moins une roue motorisée équipant ledit deuxième essieu sont simultanément en contact contre un plan de roulement pour permettre le roulage de l'aéronef.

Dans la seconde configuration d'aéronef, ladite au moins une roue freinée équipant le premier essieu est en contact contre un plan de roulement alors que ladite au moins une roue motorisée équipant ledit deuxième essieu est écartée de ce plan de roulement, le passage de l'une de ces configurations d'aéronef vers l'autre de ces configurations d'aéronef se faisant par actionnement dudit premier actionneur.

Un tel aéronef bénéficie des avantages associés à l'atterrisseur selon l'invention.

### BREVE DESCRIPTION DES DESSINS

D'autres caractéristiques et avantages de l'invention ressortiront clairement de la description qui en est faite ci-après, à titre indicatif et nullement limitatif, en référence aux dessins annexés, dans lesquels:

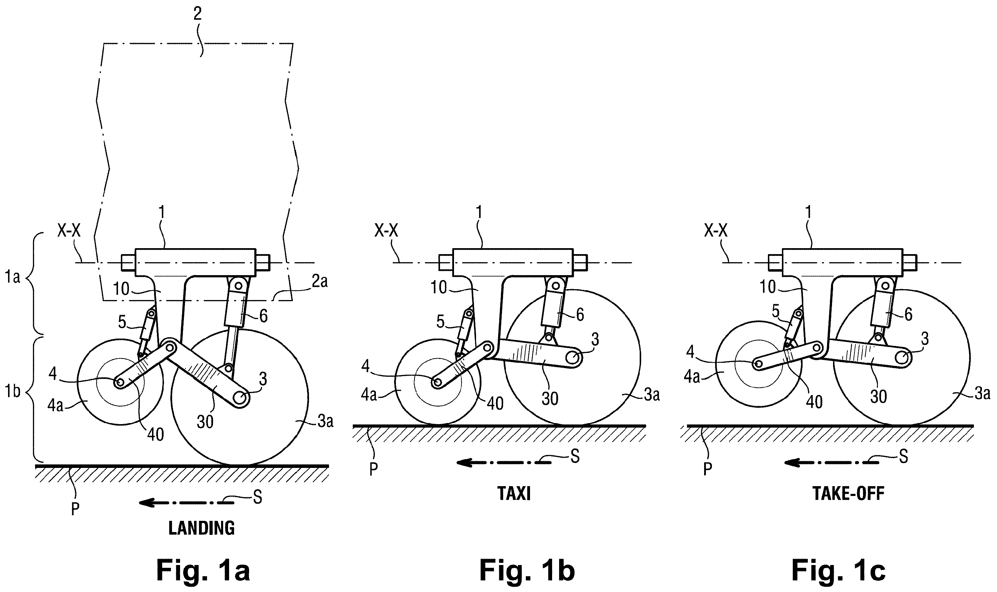

- la figure 1a est une vue de côté d'une partie d'aéronef 2 selon l'invention, cet aéronef comprenant une zone de structure d'aéronef 2a (illustrée en pointillés sur cette seule figure 1a) et un atterrisseur 1 selon l'invention dont une partie haute 1a est assemblée de manière mobile sur cette zone de structure 2a, l'atterrisseur 1 est ici dans une configuration d'atterrissage où chaque roue freinée est en contact sur le plan de roulement P du sol et où chaque roue motorisée 4a est rapprochée de la partie haute 1a pour rester à l'écart du plan de roulement P, l'aéronef est ici en phase d'atterrissage, dite « LANDING » ;
- la figure 1b est une vue de côté de l'atterrisseur 1 selon l'invention alors qu'il est dans une configuration de roulage où chacune des roues motorisée(s) 4a et freinée(s) 3a est en contact sur le plan de roulement P, l'aéronef est ici en phase de taxiage, dite phase « TAXI » ;
- la figure 1c est une vue de côté de l'atterrisseur 1 selon l'invention qui est en configuration de décollage où chaque roue motorisée 4a est éloignée du plan de roulement P alors que chaque roue freinée est en contact contre le plan P pour supporter l'aéronef, l'aéronef est ici en phase de décollage, dite phase « TAKE-OFF » ;

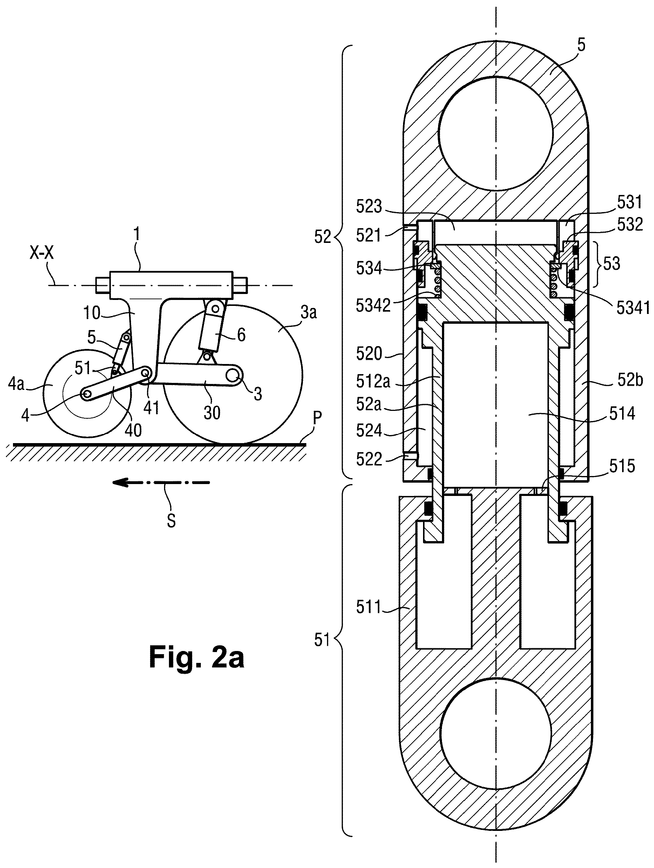

- la figure 2a est une vue de côté de l'atterrisseur 1 selon l'invention, associée à une coupe longitudinale du premier actionneur 5 alors que l'atterrisseur est en configuration d'atterrissage où seules les roues freinées 3a sont mises en contact contre le plan de roulement P alors que chaque roue motorisée 4a est éloignée de ce plan P ;

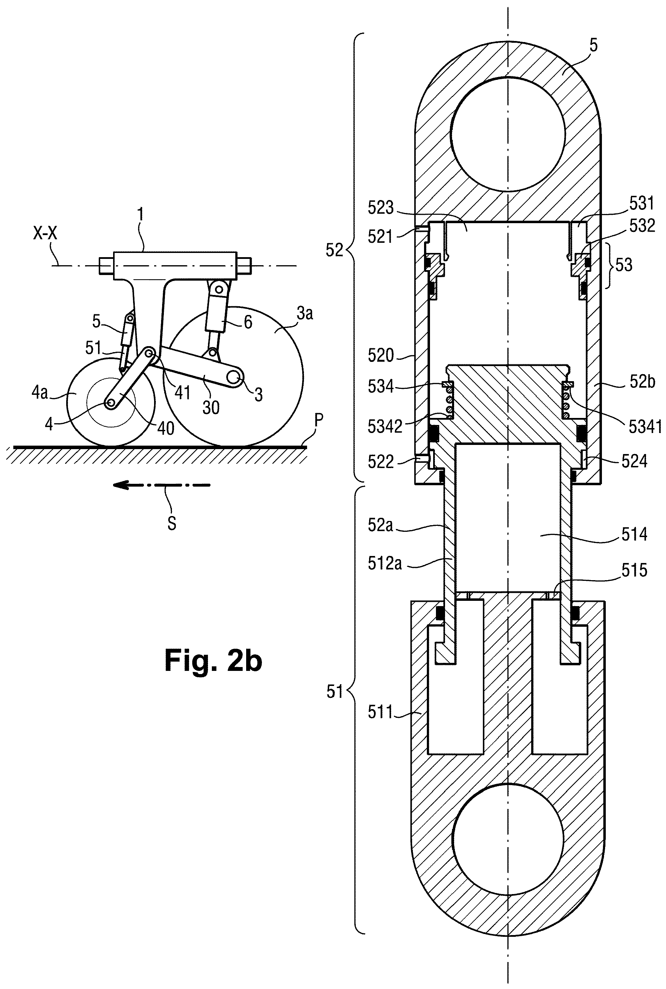

- la figure 2b est une vue de côté de l'atterrisseur 1 selon l'invention, associée avec une coupe longitudinale du premier actionneur 5 alors que l'atterrisseur 1 est dans une configuration de roulage (dans une plage de vitesse compatible avec l'utilisation de roue motorisée pour manœuvrer l'aéronef), dans cette configuration chaque roue motorisée 4a et chaque roue freinée 3a est en contact contre le plan de roulement P et l'amortisseur 51 du premier actionneur 5 est étendu, faiblement comprimé, l'atterrisseur étant en charge statique minimale ;

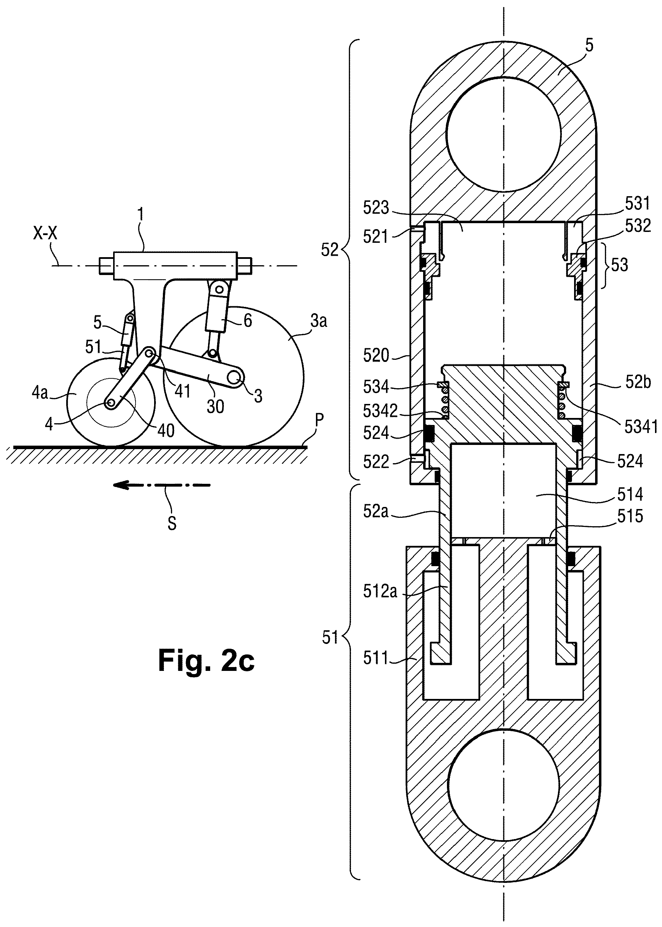

- la figure 2c est une vue de côté de l'atterrisseur 1 selon l'invention, associée avec une coupe longitudinale du premier actionneur 5 alors que l'atterrisseur 1 est en configuration de roulage (dans une plage de vitesse compatible avec l'utilisation de roue motorisée pour manœuvrer l'aéronef), dans cette configuration chaque roue motorisée 4a et chaque roue freinée 3a est en contact contre le plan de roulement P, l'amortisseur 51 du premier actionneur 5 est ici plus fortement comprimé, car l'atterrisseur est en charge statique maximale ;

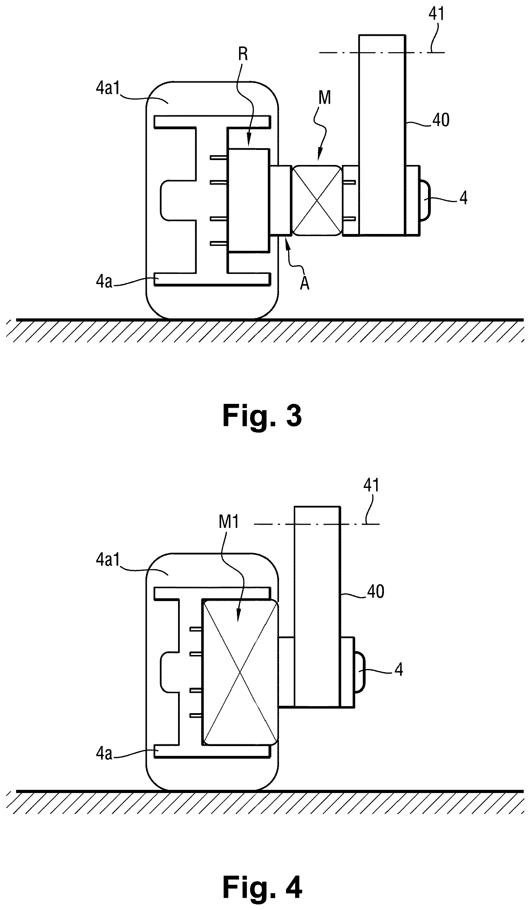

- la figure 3 est une vue de face d'une portion de l'atterrisseur selon l'invention illustrant un premier mode de liaison entre une roue motorisée 4a et le deuxième essieu 4, dans lequel la roue motorisée 4a est reliée au moteur M qui l'entraîne via un amortisseur A de chocs de transmission (ce type d'amortisseur à ressorts tangentiels permet de filtrer certaines variations du couple de transmission entre le moteur et la roue motorisée 4a) et via un réducteur de vitesse R transmettant le couple du moteur M vers la roue 4a de manière à l'entraîner à rotation avec une vitesse de rotation inférieure à la vitesse du rotation du moteur M ;
- la figure 4 est une vue de face d'une portion de l'atterrisseur selon l'invention illustrant un deuxième mode de liaison entre une roue motorisée 4a et le deuxième essieu 4, dans lequel la roue motorisée 4a et le moteur sont intégrés pour former un moteur roue, ici le moteur appartenant à un ensemble système propulseur M1 qui est inclus dans la roue 4a ;

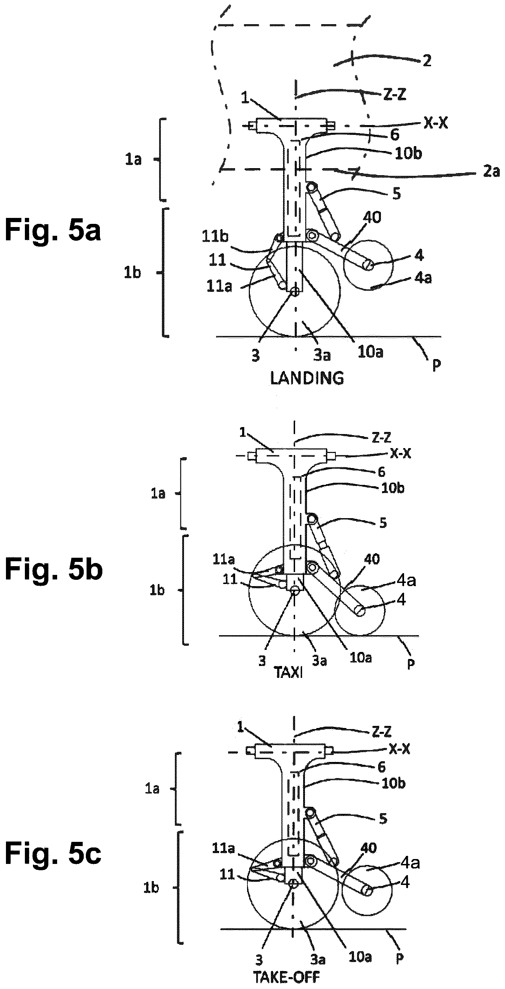

- la figure 5a est une vue de côté d'une partie d'aéronef 2 selon un exemple qui n'est pas dans le cadre des revendications, cet aéronef 2 comprenant une zone de structure d'aéronef 2a (illustrée en pointillés sur cette seule figure 5a) et un atterrisseur 1 selon le second mode de réalisation de l'invention dont une partie haute 1a est assemblée de manière mobile sur cette zone de structure 2a, l'atterrisseur 1 est ici en configuration d'atterrissage où chaque roue freinée est en contact sur le plan de roulement P du sol et où chaque roue motorisée 4a est rapprochée de la partie haute 1a pour rester à l'écart du plan de roulement P, l'aéronef est ici en phase d'atterrissage, dite « LANDING » ;
- la figure 5b est une vue de côté de l'atterrisseur 1 selon un exemple qui n'est pas dans le cadre des revendications, alors qu'il est dans sa configuration de roulage où chacune des roues motorisée(s) 4a et freinée(s) 3a est en contact sur le plan de roulement P, l'aéronef est ici en phase de taxiage, dite phase « TAXI » ;
- la figure 5c est une vue de côté de l'atterrisseur 1 selon un exemple qui n'est pas dans le cadre des revendications, cet atterrisseur étant en configuration de décollage où chaque roue motorisée 4a est éloignée du plan de roulement P alors que chaque roue freinée 3a est en contact contre le plan P pour supporter l'aéronef, l'aéronef est ici en phase de décollage, dite phase « TAKE-OFF ».

### DESCRIPTION DETAILLEE DE L'INVENTION

L'atterrisseur selon l'invention est illustré par les figures 1a, 1b, 1c, 2a, 2b, 2C qui montrent différentes configurations adoptées par l'atterrisseur 1 au cours de son utilisation.

Cet atterrisseur 1 d'aéronef 2 comporte une partie haute 1a destinée à être assemblée à une structure 2a de l'aéronef 2.

Une partie basse 1b de l'atterrisseur 1 est munie de premier et deuxième essieux 3, 4.

Le premier essieu 3 est ici un essieu arrière et le deuxième essieu 4 est ici un essieu avant par rapport à un sens S de déplacement habituel de l'aéronef 2. Cette disposition est avantageuse car elle permet de mieux maitriser la charge appliquée sur la roue motorisée 4a.

Le premier essieu 3 est équipé de roues freinées 3a.

Le deuxième essieu 4 est équipé d'une roue motorisée 4a.

Ces premier et deuxième essieux 3, 4 sont parallèles entre eux de manière que chaque roue 3a équipant le premier essieu puisse tourner autour d'un axe principal du premier essieu 3 et que chaque roue 4a équipant le deuxième essieu 4 puisse tourner autour d'un axe principal du deuxième essieu, ces axes principaux des premier et second essieux3, 4 sont parallèles entre eux.

Chaque roue freinée 3a peut rouler sur le plan de roulement P et ainsi, d'une part, supporter une partie du poids de l'aéronef 2 lors de l'atterrissage, pendant le roulage de l'aéronef et pendant le décollage et, d'autre part, transmettre un effort de freinage de l'aéronef lorsqu'un frein associé à une roue freinée est actionné.

Chaque roue motorisée permet de rouler sur le plan de roulement P et permet de transmettre un effort de manœuvre de l'aéronef (effort provoquant le déplacement de l'aéronef) lorsque la roue motorisée est mise en contact contre le plan P et que le moteur associé à cette roue motorisée 4a est activé.

L'atterrisseur 2 comporte un premier actionneur 5 agencé pour déplacer le deuxième essieu 4 entre une position éloignée et une position rapprochée vis-à-vis de ladite partie haute 1a indépendamment du premier essieu 3.

Dans la position éloignée, les roues 3a, 4a qui équipent les premier et second essieux 3, 4 sont positionnées pour être simultanément en contact contre le plan de roulement **P.**

Dans la position rapprochée chaque roue 3a équipant le premier essieu 3 est positionnée pour pouvoir être en contact contre le plan de roulement P alors que chaque roue 4a équipant le deuxième essieu 4 est positionnée pour rester à distance de ce plan P.

Comme illustré sur les figures 1a à 2c, l'atterrisseur 1 selon l'invention est préférentiellement un atterrisseur principal de l'aéronef.

Un tel atterrisseur adopte une configuration rétractée dans laquelle il est placé dans une zone de la structure 2a de l'aéronef 2 et une configuration déployée dans laquelle il s'étend sous l'aéronef 2 afin de pouvoir le soutenir et permettre son roulage sur le plan de roulement P.

L'atterrisseur est ici relié à la structure 2a via un axe de pivotement principal X-X de l'atterrisseur sensiblement parallèle au sens de déplacement habituel S de l'aéronef.

Alternativement, l'atterrisseur selon l'invention pourrait être relié à la structure 2a de l'aéronef 2 via tout autre mécanisme de liaison classiquement utilisé.

L'atterrisseur comporte aussi un actionneur principal (non représenté) pour commander le passage de l'atterrisseur (ici par pivotement de l'atterrisseur autour de l'axe X-X) entre sa configuration rétractée et sa configuration déployée.

Chaque roue 3a équipant le premier essieu 3 est une roue freinée 3a et chaque roue 4a équipant le deuxième essieu 4 est une roue motorisée 4a.

L'atterrisseur comporte une jambe 10 dont une extrémité haute appartient à la partie haute 1a de l'atterrisseur 1 et dont une extrémité basse appartient à la partie basse 1b de l'atterrisseur.

Un bras de manœuvre 40 est monté pivotant vis-à-vis de cette jambe 10, en l'occurrence via un pivot 41 situé au niveau de l'extrémité basse de la jambe 10.

Le deuxième essieu 4 équipé de la roue motorisée 4a est fixé sur ce bras de manœuvre 40 à distance de la jambe 10.

Le premier actionneur 5 est d'une part relié à la jambe 10 et d'autre part relié audit bras de manœuvre 40 pour pivoter ce bras de manœuvre 40 par rapport à la jambe 10 et ainsi déplacer le deuxième essieu entre sa position éloignée vis-à-vis de la partie haute 1a et sa position rapprochée vis-à-vis de la partie haute 1a.

L'atterrisseur comporte aussi un bras principal 30 qui est monté pivotant vis-à-vis de la jambe 10 via un pivot 41 situé au niveau de l'extrémité basse de la jambe 10.

Ce pivot 41 peut être le même que celui utilisé pour le montage pivotant du bras de manœuvre 40 vis-à-vis de la jambe 10 mais il pourrait s'agir d'un autre pivot.

Le bras de manœuvre 40 est monté pivotant vis-à-vis de la jambe 10 pour uniquement autoriser un mouvement de tangage de ce bras de manœuvre 40.

De même, le bras principal 30 est monté pivotant vis-à-vis de la jambe 10 pour uniquement autoriser un mouvement de tangage de ce bras principal 30.

Un mouvement de tangage est un mouvement de rotation autour d'un axe transversal de l'atterrisseur qui, lors du roulage, est parallèle à l'axe transversal de l'aéronef 2.

Le premier essieu 3 est fixé sur le bras principal 30, à distance de la jambe 10.

Un amortisseur principal 6 est d'une part relié (via une première liaison pivot) à la jambe 10 et d'autre part relié (via une seconde liaison pivot) audit bras principal 30 pour amortir un mouvement de pivotement de ce bras principal 30 par rapport à la jambe 10 et ainsi amortir des déplacements du premier essieu 3 vis-à-vis de la jambe 10.

Ainsi, le déplacement du premier essieu 3 est amorti par l'amortisseur principal 6 ce qui permet d'une part à la jambe 10 d'appartenir à une partie suspendue amortie de l'atterrisseur et d'autre part à la roue motorisée 4a et au premier actionneur 5 d'être assemblés sur cette partie suspendue de l'atterrisseur.

Les équipements qui sont fixés sur la partie suspendue sont ainsi protégés de vibrations occasionnées lors du roulage des roues freinées 3a.

Préférentiellement, le premier essieu 3 est équipé d'au moins deux roues freinées 3a.

Préférentiellement ces roues freinées 3a sont disposées de part et d'autre du bras principal 30.

Pour simplifier les vues de côté de l'atterrisseur selon l'invention illustrées aux figures 1a, 1b, 1c, 2a, 2b, 2c, la roue freinée cachant normalement le bras principal 30 a été omise. Il est à noter que le nombre de roues freinées 3a et leurs dispositions sur le premier essieu 3 pourraient varier sans sortir du cadre de la présente invention.

Ici, le deuxième essieu 4 s'étend principalement d'un côté du bras de manœuvre 40 où se trouve l'unique roue motorisée 4a de l'atterrisseur.

Il est toutefois envisageable que ce deuxième essieu 4 soit équipé de plusieurs roues motorisées dont le nombre et la disposition pourraient varier sans sortir du cadre de l'invention.

En particulier, on pourrait avoir deux roues motorisées respectivement placées de part et d'autre du bras de manœuvre 40.

Il est à noter qu'en général chaque roue motorisée 4a est associée à un moteur M qui lui correspond et qui permet son entraînement, mais il est également envisageable qu'une roue motorisée soit entraînée par plusieurs moteurs ou inversement qu'un même moteur entraîne plusieurs roues motorisées.

Préférentiellement le moteur d'entraînement d'une roue motorisée 4a est un moteur électrique M alimenté par une unité d'alimentation électrique appartenant à l'aéronef.

Comme illustré sur la figure 3, un moteur M peut être monté à l'extérieur de la roue motorisée 4a avec une chaîne cinématique entre le moteur M et la roue 4a qui est intégralement supportée par le deuxième essieu 4, le moteur M se trouvant à distance de la roue 4a, entre le bras de manœuvre 40 et la roue 4a.

Alternativement, comme illustré sur la figure 4, le moteur peut être intégré à la roue. Dans ce mode, le moteur appartient à un ensemble système propulseur M1 essentiellement placé dans la roue 4a, à distance du pneu 4a1.

Préférentiellement, le premier actionneur 5 comporte un premier amortisseur 51 interposé entre le bras de manœuvre 40 et à la jambe 10 de manière à amortir un mouvement de pivotement du bras de manœuvre 40 vis-à-vis de la jambe 10.

Comme on le comprend sur les figures 2a à 2c, ce premier amortisseur 51 est doté de première et seconde pièces 511, 512 montées coulissantes l'une par rapport à l'autre et définissant ensemble des première et seconde chambres d'amortisseur 513, 514 qui sont séparées l'une de l'autre par une paroi mobile 515 du premier amortisseur 51.

Cette paroi mobile 515 est ici définie par une portion de la première pièce coulissante 511 qui forme un piston coulissant à étanchéité dans un cylindre 512a défini dans la seconde pièce 512.

Ces première et seconde chambres 513, 514 du premier amortisseur 51 présentent des volumes internes respectifs qui varient en fonction d'une position de coulissement de la paroi mobile 515 de l'amortisseur vis-à-vis de la seconde pièces coulissantes 512 du premier amortisseur 51.

Alternativement, la paroi mobile 515 qui délimite les deux chambres 513, 514 pourrait être définie par une portion de la seconde pièce coulissante 512 qui formerait un piston coulissant à étanchéité dans un cylindre défini dans la première pièce 511.

La paroi mobile 515 est équipée d'au moins un passage reliant les chambres 513, 514 entre elles pour permettre un passage de fluide d'une de ces chambres vers l'autre de ces chambres afin de d'amortir le déplacement des première et deuxième pièces 511, 512 l'une par rapport à l'autre)

Le premier actionneur 5 comporte aussi un vérin télescopique 52 de longueur variable pour faire varier l'orientation du bras de manœuvre 40 par rapport à la jambe 10.

Le vérin télescopique 52 du premier actionneur est un vérin hydraulique doté d'un premier port 521 de passage de fluide hydraulique.

La longueur de ce vérin 52 est variable en fonction d'un volume de fluide hydraulique admis dans ce vérin 52 via ce premier port 521 de passage de fluide hydraulique.

Le vérin télescopique 52 du premier actionneur 5 comporte une première tige de vérin 52a et un premier cylindre 52b.

La première tige de vérin 52a est montée coulissante à étanchéité dans ce premier cylindre 52b de manière à définir une chambre principale 523 dans laquelle débouche ledit premier port de passage 521 de fluide hydraulique.

La première tige de vérin 52a et le premier cylindre 52b définissent ensemble une chambre secondaire 524 dans laquelle débouche un deuxième port de passage 522 de fluide hydraulique.

Ce vérin hydraulique télescopique 52 est un vérin double effet de longueur variable entre une longueur minimale et une longueur maximale.

Sa longueur minimale est atteinte lorsque la première tige de vérin 52 est en butée contre une première butée formée à l'intérieur de la chambre principale 523.

Sa longueur maximale est atteinte lorsque la première tige de vérin est en butée contre une deuxième butée formée à l'intérieur de la chambre secondaire 524.

L'augmentation de la longueur de ce vérin 52 se fait par admission de fluide vers la chambre principale 523 via le premier port 521 et par refoulement de fluide hors de la chambre secondaire 524 via le deuxième port 522.

La diminution de la longueur de ce vérin 52 se fait par admission de fluide vers la chambre secondaire 524 via le deuxième port 522 et par refoulement de fluide hors de la chambre principale 523 via le premier port 521.

L'aéronef 2 comporte un circuit hydraulique (non représenté) doté d'une conduite d'alimentation en fluide hydraulique sous haute pression reliée à une pompe hydraulique et d'une conduite de retour de fluide à basse pression relativement à ladite haute pression.

L'aéronef 2 comporte aussi un système de distribution hydraulique (non représenté) relié aux premier et second ports du vérin 521, 522 et aux conduites d'alimentation et de retour pour sélectivement adopter :
- au moins une configuration d'extension de longueur du vérin 52 dans laquelle le premier port 521 est mis en relation avec la conduite d'alimentation et le second port 522 est soit préférentiellement mis en relation avec la conduite de retour, soit mis en relation avec le premier port 521 ; et
- au moins une configuration de réduction de longueur du vérin dans laquelle le deuxième port est mis en relation avec la conduite d'alimentation et le premier port est mis en relation avec la conduite de retour.

Selon un mode particulier, on pourrait prévoir que le système de distribution hydraulique puisse adopter une configuration d'immobilisation du vérin dans laquelle la circulation de fluide via les premier et deuxième ports 521, 522 serait interdite.

Ce vérin 52 pourrait aussi être un vérin monostable qui en cas de défaut d'alimentation hydraulique, par exemple en cas de baisse de pression hydraulique dans l'une au moins de ses chambres en dessous d'une valeur minimale prédéfinie, reviendrait automatiquement vers une longueur d'actionneur 52 dans laquelle la roue motorisé 4a est éloignée du plan de roulement P. A cet effet, l'actionneur des figures 2a, 2b, 2c pourrait être équipé d'un moyen de retour élastique (non illustré) exerçant un effort élastique s'opposant à l'allongement du vérin 52.

Le premier actionneur 5 comporte aussi un système de verrouillage 53 adoptant sélectivement une configuration verrouillée et une configuration déverrouillée.

Dans sa configuration verrouillée, le vérin télescopique 52 du premier actionneur 5 est bloqué pour maintenir le deuxième essieu 4 dans sa position rapprochée vis-à-vis de ladite partie haute 1a de l'atterrisseur.

Dans sa configuration déverrouillée, le vérin télescopique 52 est libéré pour pouvoir déplacer le deuxième essieu 4 entre sa position rapprochée vis-à-vis de la partie haute 1a de l'atterrisseur et sa position éloignée vis-à-vis de ladite partie haute 1a de l'atterrisseur.

Ce système de verrouillage 53 est agencé pour passer de sa configuration verrouillée vers sa configuration déverrouillée en réponse à une commande de déverrouillage.

Dans le cas présent, la commande de déverrouillage consiste en une augmentation de pression du fluide hydraulique admis via le premier port de passage de fluide hydraulique.

Comme on le comprendra par la suite, le passage de la configuration déverrouillée vers la configuration verrouillée se fait automatiquement lors de la rétractation du vérin télescopique 52.

Comme illustré sur les figures 2a, 2b, 2c, le système de verrouillage 53 comporte des griffes 531 et une bague coulissante 532 par rapport à un corps 520 du vérin télescopique 52 entre une position de blocage des griffes 531 et une position de libération des griffes 531.

Ce système de verrouillage 53 est agencé de manière que lorsqu'il se trouve en configuration verrouillée (voir la figure 2a), la bague coulissante 532 est alors dans sa position de blocage des griffes 531 où elle coince des portions d'extrémité des griffes 531 dans une zone de réception de ces extrémités de griffes de manière à ce que les griffes ainsi coincées s'opposent à toute variation de longueur du vérin télescopique 52.

Ce système de verrouillage 53 est aussi agencé de manière que lorsqu'il se trouve en configuration déverrouillée (voir les figures 2b et 2c), la bague coulissante 532 est alors dans sa position de libération des griffes 531 et les portions d'extrémité des griffes 531 sont alors libres de s'écarter de ladite zone de réception des extrémités de griffes de manière autoriser une variation de longueur du vérin télescopique 52.

La bague coulissante 532 du système de verrouillage 53 est ici disposée de manière à passer de sa position de blocage des griffes 531 vers sa position de libération des griffes sous l'effet d'une augmentation de la pression de fluide hydraulique à l'intérieur de la chambre principale 53 au-delà d'un seuil de pression minimum prédéterminé.

La première tige 52a de vérin 52 porte une butée élastiquement déformable 534 destinée à venir buter contre la bague coulissante 532 du système de verrouillage 53 lorsque le vérin télescopique 52 est rétracté et présente une longueur courante inférieure à une valeur de longueur prédéterminée à partir de laquelle la butée élastiquement déformable 534 est mise en contact avec la bague 532.

Ici la butée élastiquement déformable 534 est constituée par une rondelle 5341 montée coulissante autour d'une zone d'extrémité de la première tige du vérin 52 et par un ressort 5342 également monté autour de cette zone d'extrémité de la première tige.

Ce ressort 5342 pousse cette rondelle 5341 en direction de la bague coulissante 532.

La première tige 52a comporte une excroissance terminale contre laquelle la rondelle 5341 vient buter sous l'effet du ressort 5342 tant que cette rondelle 5341 est maintenue à l'écart de la bague coulissante 532 du système de verrouillage.

Ainsi, lorsque le vérin se rétracte, et que la tige 512 du vérin 52 approche de la fin de course, les griffes 531 viennent dans un premier temps se loger dans la zone de réception de ces extrémités de griffes qui est ici en partie formée par une rainure annulaire de la tige 512 puis, dans un second temps, la butée élastiquement déformable 534 portée par la tige de vérin 512 arrive au contact de la bague 532 et pousse la bague 532 vers sa position de blocage des griffes.

Les extrémités des griffes 531 sont alors bloquées dans la zone de réception des griffes, la bague 532 butant alors contre ces extrémités des griffes pour interdire la sortie hors de la zone de réception des griffes.

Lorsque la pression hydraulique dans la chambre 523 passe le seuil prédéterminé, la bague 532 qui est coulissante à étanchéité est déplacées vers sa position de libération des griffes 531 et elle s'écarte des griffes qui peuvent alors sortir librement de la zone de réception des griffes de manière à autoriser le coulissement de la tige 512 et l'expansion du vérin 52.

Grâce à ces griffes 531, chaque roue motorisée 4a portée par le deuxième essieu se trouve sécurisée à l'écart du plan de roulement et seule une action volontaire d'augmentation de la pression dans la chambre 523 permet de libérer les griffes et autoriser le déplacement du bras de manœuvre 40 par le premier actionneur 5 afin de forcer la roue motorisée contre le plan de roulement.

L'amortisseur 51 du premier actionneur 5 est conformé pour exercer un effort de rappel forçant cet amortisseur à revenir vers une configuration étendue de l'amortisseur 51.

Ce premier actionneur 5 est agencé pour que lorsque la roue motorisée est en contact contre le plan de roulement, l'amortisseur 51 soit alors comprimé et exerce un effort élastique s'opposant à cette compression. Ainsi, la roue motorisée 4a est forcée en direction du sol P ce qui améliore la friction de la roue sur le sol et permet d'augmenter l'effort moteur transmissible de la roue motorisée 4a.

L'aéronef peut aussi comporter une unité de commande de l'atterrisseur qui est reliée audit système de distribution hydraulique.

Le premier actionneur 5 est préférentiellement commandé via une unité de commande (non représentée) pour que tant que la vitesse de l'aéronef 2 est supérieure à un seuil de vitesse prédéterminé, ce premier actionneur 5 applique un effort tendant à maintenir le deuxième essieu 4 dans sa position rapprochée vis-à-vis de ladite partie haute 1a de l'atterrisseur 1.

Ainsi, tant que la vitesse de l'aéronef est supérieure au seuil de vitesse prédéterminé, les roues motorisées 4a sont forcément éloignées du plan de roulement P (sol) et seule la ou les roue freinée 3a portée(s) par le premier essieu 3 peuvent venir en contact avec le plan de roulement P.

Le premier actionneur 5 est préférentiellement commandé par l'unité de commande pour que lorsque la vitesse de l'aéronef est inférieure au seuil de vitesse prédéterminé, ce premier actionneur 5 applique alors un effort tendant à maintenir le deuxième essieu 4 exclusivement équipé de roue motorisée dans sa position éloignée vis-à-vis de ladite partie haute 1a de l'atterrisseur 1 (chaque roue motorisée portée par ce deuxième essieu 4 étant alors en contact contre le plan de roulement P et chaque roue freinée portée par le premier essieu 3 étant également en contact avec le plan de roulement).

Il est à noter que l'amortisseur principal 6 pourrait également comporter des moyens de réglage commandés pour faire varier sa longueur, sa raideur et/ou son amortissement. Ainsi, la variation de longueur et/ou raideur et/ou d'amortissement de l'amortisseur principal pourrait varier en fonction de la vitesse de l'aéronef.

Ainsi, tant que la vitesse de l'aéronef est supérieure au seuil de vitesse prédéterminé, cet amortisseur principal 6 pourrait être commandé pour appliquer sur le bras principal 30 un effort tendant à plaquer la roue freinée 3a contre le plan de roulement P et à maintenir la jambe 10 à une distance suffisamment écartée du plan de roulement P pour garantir qu'aucune roue motorisée 4a portée par le deuxième essieu 4 ne puisse venir en contact avec le plan de roulement P.

Par contre, tant que la vitesse de l'aéronef 2 est inférieure au seuil de vitesse prédéterminé et que le deuxième essieu 4 se trouve dans sa position éloignée vis-à-vis de la partie haute 1a, cet amortisseur principal 6 et le premier actionneur 5 pourraient être commandés pour plaquer les roues motorisée et freinée sur le plan de roulement P et ainsi réguler la répartition des efforts d'appui de l'aéronef, entre les roues freinée(s) et motorisée(s).

De cette manière on peut garantir qu'à chaque instant lors du roulage des roues motorisée et freinée, chaque roue motorisée peut transmettre des efforts de traction efficaces de l'aéronef et que chaque roue freinée peut soutenir l'aéronef tout en transmettant des efforts de freinage efficaces.

Le pilotage du premier actionneur 5, permet d'optimiser l'effort de contact au sol appliqué par la roue motorisée lors du roulage et il permet par conséquent d'optimiser la répartition des efforts entre roues motorisée(s) et roue freinée(s).

De manière générale, grâce à l'invention, lors du roulage, chaque roue freinée 3 équipant le premier essieu reste en contact contre le plan de roulement alors que ladite au moins une roue motorisée équipant le deuxième essieu est sélectivement mise en contact contre le plan de roulement P ou éloignée de ce plan de roulement P selon que la vitesse courante de roulage est adaptée ou non au fonctionnement de la roue motorisée.

Grâce à l'invention :
- le pneumatique de chaque roue freinée et le diamètre de chaque roue freinée peuvent être adaptés pour répondre aux besoins associés aux phases d'atterrissage, de freinage, et de décollage ; alors que
- le pneumatique de chaque roue motorisée et le diamètre de chaque roue motorisée peuvent être adaptés pour répondre aux seuls besoins de manœuvre de l'aéronef, pendant des plages de roulage situées en dehors des phases d'atterrissage, de freinage à forte puissance, et de décollage.

L'invention n'est pas limitée aux exemples décrits précédemment et elle englobe toute variante entrant dans le cadre défini par les revendications.

Dans le mode de réalisation de l'atterrisseur 1 d'aéronef 2 illustré aux figures 5a, 5b, 5c, ce mode n'étant pas dans le cadre des revendications, l'atterrisseur 1 présente toujours une partie haute 1a destinée à être assemblée à une structure 2a de l'aéronef 2 et une partie basse 1b munie de premier et deuxième essieux 3, 4. Le premier essieu 3 est toujours équipé d'au moins une roue freinée 3a et le deuxième essieu 4 est toujours équipé d'au moins une roue motorisée 4a.

L'atterrisseur 1 comporte toujours un premier actionneur 5 agencé pour déplacer le deuxième essieux 4 entre une position éloignée et une position rapprochée vis-à-vis de la partie haute 1a indépendamment de premier essieux 3 de telle manière que :
- dans l'une desdites positions, illustrée à la figure 5b, les roues 3a, 4a puissent être simultanément en contact contre un plan de roulement P alors que ;
- dans l'autre desdites positions, illustrée par les figures 5a ou 5b, chaque roue 3a équipant le premier essieu 3 est en contact contre le plan de roulement P alors que chaque roue 4a équipant le deuxième essieu 4 reste à distance de ce plan de roulement P.

L'atterrisseur des figures 5a, 5b, 5c comporte une jambe 10 formée d'une partie inférieure 10a portant le premier essieu 3 et d'une partie supérieure 10b destinée à être reliée à la structure 2a de l'aéronef.

La partie supérieure 10b de la jambe 10 appartient à la partie haute 1a de l'atterrisseur 1 et la partie inférieure 10a de la jambe appartient à la partie basse 1b de l'atterrisseur.

Ces parties inférieure et supérieure 10a, 10b de la jambe 10 sont coulissantes l'une par rapport à l'autre suivant un axe longitudinal Z-Z de la jambe 10 et un amortisseur principal 6 est disposé pour amortir le coulissement relatif de la partie inférieure 10a de la jambe 10 vis-à-vis de la partie supérieure 10b.

La partie supérieure 10b de la jambe comprend un caisson d'atterrisseur et la partie inférieure 10a comprend une tige coulissante portant le premier essieu 3, cette tige coulissant à l'intérieur du caisson.

Un bras de manœuvre 40 portant le deuxième essieu 4 est monté à rotation sur partie supérieure 10b de la jambe 10, le premier actionneur 5 commandant l'orientation de ce bras de manœuvre 40 vis-à-vis de la jambe 10.

Le bras de manœuvre 40 est monté pivotant vis-à-vis de la jambe 10 pour uniquement autoriser un mouvement de tangage de ce bras de manœuvre 40.

Le premier actionneur 5 est toujours d'une part relié à la jambe 10 et d'autre part relié audit bras de manœuvre 40 pour pivoter ce bras de manœuvre 40 par rapport à la jambe 10 et ainsi déplacer le deuxième essieu 4 entre sa position éloignée vis-à-vis de la partie haute 1a et sa position rapprochée vis-à-vis de la partie haute 1a.

Ce premier actionneur 5 est ici identique à celui illustré aux figures 1a à 2c.

Dans cette variante des figures 5a à 5c, qui n'est pas dans le cadre des revendications, le deuxième essieu 4 et la ou les roues motorisées 4a sont portées par le bras de manœuvre 40 conformément à ce qui a été présenté précédemment en référence aux figures 1a à 4.

Par contre, contrairement au mode de réalisation illustré sur les figures 1a à 4 où le premier essieu 3 est porté par le bras principal 30, sur les figures 5a, 5b, 5c, das un exemple qui n'est pas dans le cadre des revendications, le premier essieu 3 est directement assemblé sur partie inférieure 10 de la jambe 10, en l'occurrence sur la tige coulissante.

Enfin, dans ce mode de réalisation des figures 5a à 5c, un compas est utilisé pour permettre le coulissement de la partie inférieure 10a par rapport à la partie supérieure 10b. Ce compas 11 comporte des bras supérieur 11b et inférieur 11a articulés l'un par rapport à l'autre.

Le bras supérieur 11b est monté pivotant sur la partie supérieure 10b via un axe supérieur et le bras inférieur 11a est monté pivotant sur la partie inférieure 10a via un axe inférieur, ces axes supérieur et inférieur étant parallèles entre eux.

L'invention peut comprendre d'autres modes de réalisation, en particulier, bien que le système de verrouillage 53 présenté ci-avant comporte des griffes, il pourrait alternativement comporter des segments de verrouillage mobiles en translation pour alternativement verrouiller l'actionneur et interdire le déplacement du deuxième essieu 4 vis-à-vis de la partie haute 1a d'atterrisseur ou déverrouiller l'actionneur et autoriser le déplacement du deuxième essieu 4 par rapport à la partie haute 1a.

A cette fin, le système de verrouillage peut comporter des segments montés à coulissement transversalement par rapport au corps du vérin télescopique 52 et une pièce mobile par rapport à ce corps 520 du vérin entre une position de blocage des segments et une position de libération des segments.

Le système de verrouillage 53 est ici agencé de manière que :
- lorsqu'il se trouve en configuration verrouillée, la pièce mobile est alors dans sa position de blocage des segments où elle pousse des portions d'extrémité des segments dans une zone de réception de ces extrémités de segment de manière à ce que les segments ainsi poussés s'opposent à toute variation de longueur du vérin télescopique 52; et de manière que
- lorsqu'il se trouve en configuration déverrouillée, la pièce mobile par rapport au corps 520 de vérin 52 est alors dans sa position de libération des segments et les portions d'extrémité des segments étant libres de s'écarter de ladite zone de réception des extrémités de segments de manière autoriser une variation de longueur du vérin télescopique 52.

## Revendications

1. Atterrisseur (1) d'aéronef (2) présentant une partie haute (1a) destinée à être assemblée à une structure (2a) de l'aéronef (2) et une partie basse (1b) munie de premier et deuxième essieux (3, 4), le premier essieu (3) étant équipé d'au moins une roue freinée (3a) et le deuxième essieu (4) étant équipé d'au moins une roue motorisée (4a), l'atterrisseur (1) comporte un premier actionneur (5) agencé pour déplacer l'un des essieux (4) entre une position éloignée et une position rapprochée vis-à-vis de la partie haute (1a) indépendamment de l'autre des essieux (3) de telle manière que, dans l'une desdites positions les roues (3a, 4a) puissent être simultanément en contact contre un plan de roulement (P) alors que dans l'autre desdites positions chaque roue (3a) équipant le premier essieu (3) est en contact contre le plan de roulement (P) alors que chaque roue (4a) équipant le deuxième essieu (4) reste à distance de ce plan de roulement (P), l'atterrisseur comprenant une jambe (10) ayant une extrémité haute appartenant à la partie haute (1a) de l'atterrisseur (1) et une extrémité basse appartenant à la partie basse (1b) de l'atterrisseur et un bras de manœuvre (40), ce bras de manœuvre (40) étant monté pivotant vis-à-vis de la jambe (10), ledit deuxième essieu (4) équipé de la roue motorisée (4a) étant fixé sur ce bras de manœuvre (40) à distance de la jambe (10), le premier actionneur (5) étant d'une part relié à la jambe (10) et d'autre part relié audit bras de manœuvre (40) pour pivoter ce bras de manœuvre (40) par rapport à la jambe (10) et ainsi déplacer le deuxième essieu entre sa position éloignée vis-à-vis de la partie haute (1a) et sa position rapprochée vis-à-vis de la partie haute (1a), **caractérisé en ce que** le premier actionneur (5) comporte un premier amortisseur (51) interposé entre le bras de manœuvre (40) et à la jambe (10) de manière à amortir un mouvement de pivotement du bras de manœuvre (40) vis-à-vis de la jambe (10), l'atterrisseur d'aéronef comprenant un bras principal (30) monté pivotant vis-à-vis de la jambe (10), ledit premier essieu (3) équipé de la roue freinée (3a) étant fixé sur ce bras principal (30) à distance de la jambe (10), un amortisseur principal (6) étant d'une part relié à la jambe (10) et d'autre part relié audit bras principal (30) pour amortir un mouvement de pivotement de ce bras principal (30) par rapport à la jambe (10) et ainsi amortir des déplacements du premier essieu (3) vis-à-vis de la jambe (10).

2. Atterrisseur d'aéronef selon la revendication 1, dans lequel le premier actionneur (5) comporte un vérin télescopique (52) de longueur variable pour faire varier l'orientation du bras de manœuvre (40) par rapport à la jambe (10).

3. Atterrisseur d'aéronef selon la revendication 2, dans lequel le premier actionneur (5) comporte un système de verrouillage (53) adoptant sélectivement une configuration verrouillée et une configuration déverrouillée, dans sa configuration verrouillée, le vérin télescopique (52) du premier actionneur (5) est bloqué pour maintenir le deuxième essieu (4) dans sa position rapprochée vis-à-vis de ladite partie haute (1a) de l'atterrisseur et dans sa configuration déverrouillée le vérin télescopique (52) étant libéré pour pouvoir déplacer le deuxième essieu (4) entre sa position rapprochée vis-à-vis de la partie haute (1a) de l'atterrisseur et sa position éloignée vis-à-vis de ladite partie haute (1a) de l'atterrisseur.

4. Atterrisseur d'aéronef selon la revendication 3, dans lequel le système de verrouillage (53) est agencé pour passer de sa configuration verrouillée vers sa configuration déverrouillée en réponse à une commande de déverrouillage.

5. Atterrisseur d'aéronef selon l'une quelconque des revendications 3 ou 4, dans lequel le système de verrouillage (53) comporte des griffes (531) et une bague coulissante (532) par rapport à un corps (520) du vérin télescopique (52) entre une position de blocage des griffes (531) et une position de libération des griffes (531), le système de verrouillage (53) étant agencé de manière que :
- lorsqu'il se trouve en configuration verrouillée, la bague coulissante (532) est alors dans sa position de blocage des griffes (531) où elle coince des portions d'extrémité des griffes (531) dans une zone de réception de ces extrémités de griffes de manière à ce que les griffes ainsi coincées s'opposent à toute variation de longueur du vérin télescopique (52) ; et de manière que
- lorsqu'il se trouve en configuration déverrouillée, la bague coulissante (532) est alors dans sa position de libération des griffes (531) et les portions d'extrémité des griffes (531) étant libres de s'écarter de ladite zone de réception des extrémités de griffes de manière autoriser une variation de longueur du vérin télescopique (52).

6. Atterrisseur d'aéronef selon l'une quelconque des revendications 3 ou 4, dans lequel le système de verrouillage (53) comporte des segments montés à coulissement transversalement par rapport au corps du vérin (520) et une pièce mobile par rapport au corps (520) du vérin télescopique (52) entre une position de blocage des segments et une position de libération des segments, le système de verrouillage (53) étant agencé de manière que :
- lorsqu'il se trouve en configuration verrouillée, la pièce mobile est alors dans sa position de blocage des segments où elle pousse des portions d'extrémité des segments dans une zone de réception de ces extrémités de segment de manière à ce que les segments ainsi poussés s'opposent à toute variation de longueur du vérin télescopique (52) ; et de manière que
- lorsqu'il se trouve en configuration déverrouillée, la pièce mobile par rapport au corps est alors dans sa position de libération des segments et les portions d'extrémité des segments étant libres de s'écarter de ladite zone de réception des extrémités de segments de manière autoriser une variation de longueur du vérin télescopique (52).

7. Atterrisseur d'aéronef selon l'une quelconque des revendications 2 à 6, dans lequel le vérin télescopique (52) du premier actionneur est un vérin hydraulique doté d'un premier port (521) de passage de fluide hydraulique, la longueur de ce vérin (52) étant variable en fonction d'un volume de fluide hydraulique admis dans ce vérin (52) via ce premier port (521) de passage de fluide hydraulique.

8. Atterrisseur d'aéronef selon la revendication 7, dans lequel le vérin télescopique (52) du premier actionneur (5) comporte une première tige de vérin (52a) et un premier cylindre (52b), la première tige de vérin (52a) étant montée coulissante à étanchéité dans ce premier cylindre (52b) de manière à définir une chambre principale (523) dans laquelle débouche ledit premier port de passage (521) de fluide hydraulique.

9. Atterrisseur d'aéronef selon la revendication 8, dans lequel la première tige de vérin (52a) et le premier cylindre (52b) définissent ensemble une chambre secondaire (524) dans laquelle débouche un deuxième port de passage (522) de fluide hydraulique, ce vérin hydraulique télescopique (52) du premier actionneur (5) étant un vérin double effet de longueur variable entre une longueur minimale et une longueur maximale.

10. Atterrisseur selon l'une quelconque des revendications 1 à 9, dans lequel le premier essieu (3) est un essieu arrière et le deuxième essieu (4) est un essieu avant par rapport à un sens (S) de déplacement habituel de l'aéronef (2).

11. Aéronef (2) comportant au moins un atterrisseur (1) selon l'une quelconque des revendications 1 à 10, dans lequel l'aéronef (2) est agencé pour sélectivement adopter des première et seconde configurations d'aéronef distinctes l'une de l'autre, dans la première configuration d'aéronef ladite au moins une roue freinée (3a) équipant le premier essieu (3) et ladite au moins une roue motorisée (4a) équipant ledit deuxième essieu (4) étant simultanément en contact contre un plan de roulement (P) pour permettre le roulage de l'aéronef, dans la seconde configuration d'aéronef (2) ladite au moins une roue freinée (3a) équipant le premier essieu (3) est en contact contre un plan de roulement (P) alors que ladite au moins une roue motorisée (4a) équipant ledit deuxième essieu (4) est écartée de ce plan de roulement (P), le passage de l'une de ces configurations d'aéronef vers l'autre de ces configurations d'aéronef se faisant par actionnement dudit premier actionneur (5).

## Patentansprüche

1. Fahrwerk (1) eines Luftfahrzeugs (2) mit einem oberen Teil (1a), der dazu bestimmt ist, mit einer Struktur (2a) des Luftfahrzeugs (2) verbunden zu werden, und einem unteren Teil (1b), der mit einer ersten und einer zweiten Achse (3, 4) ausgestattet ist, wobei die erste Achse (3) mit mindestens einem gebremsten Rad (3a) und die zweite Achse (4) mit mindestens einem motorisierten Rad (4a) ausgestattet ist, wobei das Fahrwerk (1) ein erstes Stellglied (5) umfasst, das so ausgelegt ist, dass es eine der Achsen (4) unabhängig von der anderen Achse (3) zwischen einer in Bezug auf den oberen Teil (1a) entfernten Position und einer angenäherten Position verschiebt, sodass in einer der beiden Positionen die Räder (3a, 4a) gleichzeitig mit einer Lauffläche (P) in Kontakt stehen können, während in der anderen der beiden Positionen jedes Rad (3a) der ersten Achse (3) mit der Lauffläche (P) in Kontakt steht, während jedes Rad (4a) der zweiten Achse (4) von dieser Lauffläche (P) entfernt bleibt, wobei das Fahrwerk ein Bein (10) mit einem oberen Ende, das zum oberen Teil (1a) des Fahrwerks (1) gehört, und einem unteren Ende, das zum unteren Teil (1b) des Fahrwerks gehört, sowie einen Betätigungsarm (40) umfasst, wobei dieser Betätigungsarm (40) gegenüber dem Bein (10) schwenkbar angebracht ist, wobei die mit dem motorisierten Rad (4a) ausgestattete zweite Achse (4) an diesem Betätigungsarm (40) in einem Abstand zum Bein (10) befestigt ist, wobei das erste Stellglied (5) einerseits mit dem Bein (10) und andererseits mit dem Betätigungsarm (40) verbunden ist, um diesen Betätigungsarm (40) gegenüber dem Bein (10) zu schwenken und so die zweite Achse zwischen ihrer in Bezug auf den oberen Teil (1a) entfernten Position und ihrer in Bezug auf den oberen Teil (1a) angenäherten Position zu verschieben, **dadurch gekennzeichnet, dass** das erste Stellglied (5) einen ersten Dämpfer (51) umfasst, der zwischen dem Betätigungsarm (40) und dem Bein (10) angeordnet ist, um eine Schwenkbewegung des Betätigungsarms (40) gegenüber dem Bein (10) zu dämpfen, wobei das Fahrwerk des Luftfahrzeugs einen Hauptarm (30) umfasst, der gegenüber dem Bein (10) schwenkbar angebracht ist, wobei die mit dem gebremsten Rad (3a) ausgestattete erste Achse (3) an diesem Hauptarm (30) in einem Abstand zum Bein (10) befestigt ist, wobei ein Hauptdämpfer (6) einerseits mit dem Bein (10) und andererseits mit dem Hauptarm (30) verbunden ist, um eine Schwenkbewegung dieses Hauptarms (30) gegenüber dem Bein (10) zu dämpfen und so Verschiebungen der ersten Achse (3) gegenüber dem Bein (10) zu dämpfen.

2. Fahrwerk eines Luftfahrzeugs nach Anspruch 1, wobei das erste Stellglied (5) einen Teleskopzylinder (52) mit variabler Länge aufweist, um die Ausrichtung des Betätigungsarms (40) in Bezug auf das Bein (10) zu verändern.

3. Fahrwerk eines Luftfahrzeugs nach Anspruch 2, wobei das erste Stellglied (5) ein Verriegelungssystem (53) umfasst, das wahlweise eine verriegelte Konfiguration und eine entriegelte Konfiguration annimmt, wobei in seiner verriegelten Konfiguration der Teleskopzylinder (52) des ersten Stellglieds (5) arretiert ist, um die zweite Achse (4) in ihrer in Bezug auf den oberen Teil (1a) des Fahrwerks angenäherten Position zu halten, und in seiner entriegelten Konfiguration der Teleskopzylinder (52) freigegeben ist, um die zweite Achse (4) zwischen ihrer in Bezug auf den oberen Teil (1a) des Fahrwerks angenäherten Position und ihrer in Bezug auf den oberen Teil (1a) des Fahrwerks entfernten Position verschieben zu können.

4. Fahrwerk eines Luftfahrzeugs nach Anspruch 3, wobei das Verriegelungssystem (53) so ausgelegt ist, dass es als Reaktion auf einen Entriegelungsbefehl von seiner verriegelten Konfiguration in seine entriegelte Konfiguration übergeht.

5. Fahrwerk eines Luftfahrzeugs nach einem der Ansprüche 3 oder 4, wobei das Verriegelungssystem (53) Klauen (531) und einen Gleitring (532) in Bezug auf einen Körper (520) des Teleskopzylinders (52) zwischen einer Arretierposition der Klauen (531) und einer Freigabeposition der Klauen (531) umfasst, wobei das Verriegelungssystem (53) so angeordnet ist, dass:
- wenn es sich in verriegelter Konfiguration befindet, sich der Gleitring (532) in seiner Position zum Arretieren der Klauen (531) befindet, in der er die Endabschnitte der Klauen (531) in einem Aufnahmebereich für diese Klauenenden festklemmt, sodass die so festgeklemmten Klauen jeder Längenänderung des Teleskopzylinders (52) entgegenwirken; und so, dass
- wenn es sich in entriegelter Konfiguration befindet, sich der Gleitring (532) in seiner Position zum Freigeben der Klauen (531) befindet und die Endabschnitte der Klauen (531) sich frei von dem genannten Aufnahmebereich für die Klauenenden entfernen können, um eine Längenänderung des Teleskopzylinders (52) zu ermöglichen.

6. Fahrwerk eines Luftfahrzeugs nach einem der Ansprüche 3 oder 4, wobei das Verriegelungssystem (53) Segmente umfasst, die gegenüber dem Zylinderkörper (520) quer verschiebbar angebracht sind und ein gegenüber dem Körper (520) des Teleskopzylinders (52) zwischen einer Position zum Arretieren der Segmente und einer Position zum Freigeben der Segmente bewegliches Teil umfasst, wobei das Verriegelungssystem (53) so angeordnet ist, dass:
- wenn es sich in verriegelter Konfiguration befindet, sich das bewegliche Teil in seiner Position zum Arretieren der Segmente befindet, in der es die Endabschnitte der Segmente in einen Aufnahmebereich für diese Segmentenden drückt, sodass die so gedrückten Segmente jeder Längenänderung des Teleskopzylinders (52) entgegenwirken; und so, dass
- wenn es sich in entriegelter Konfiguration befindet, sich das gegenüber dem Körper bewegliche Teil in seiner Position zum Freigeben der Segmente befindet und die Endabschnitte der Segmente sich frei von dem genannten Aufnahmebereich für die Segmentenden entfernen können, um eine Längenänderung des Teleskopzylinders (52) zu ermöglichen.

7. Fahrwerk eines Luftfahrzeugs nach einem der Ansprüche 2 bis 6, wobei der Teleskopzylinder (52) des ersten Stellglieds ein Hydraulikzylinder mit einem ersten Durchgangsanschluss (521) für Hydraulikflüssigkeit ist, wobei die Länge dieses Zylinders (52) je nach dem Volumen der Hydraulikflüssigkeit, die über diesen ersten Durchgangsanschluss (521) für Hydraulikflüssigkeit in diesen Zylinder (52) eingelassen wird, variabel ist.

8. Fahrwerk eines Luftfahrzeugs nach Anspruch 7, wobei der Teleskopzylinder (52) des ersten Stellglieds (5) eine erste Zylinderstange (52a) und einen ersten Zylinder (52b) umfasst, wobei die erste Zylinderstange (52a) in diesem ersten Zylinder (52b) dichtend verschiebbar angebracht ist, sodass eine Hauptkammer (523) gebildet wird, in die der erste Durchgangsanschluss (521) für Hydraulikflüssigkeit mündet.

9. Fahrwerk eines Luftfahrzeugs nach Anspruch 8, wobei die erste Zylinderstange (52a) und der erste Zylinder (52b) zusammen eine sekundäre Kammer (524) bilden, in die ein zweiter Durchgangsanschluss (522) für Hydraulikflüssigkeit mündet, wobei dieser hydraulische Teleskopzylinder (52) des ersten Stellglieds (5) ein doppeltwirkender Zylinder mit variabler Länge zwischen einer minimalen Länge und einer maximalen Länge ist.

10. Fahrwerk nach einem der Ansprüche 1 bis 9, wobei die erste Achse (3) eine Hinterachse und die zweite Achse (4) eine Vorderachse in Bezug auf eine übliche Bewegungsrichtung (S) des Luftfahrzeugs (2) ist.

11. Luftfahrzeug (2) mit mindestens einem Fahrwerk (1) nach einem der Ansprüche 1 bis 10, wobei das Luftfahrzeug (2) so ausgelegt ist, dass es wahlweise eine erste und eine zweite, voneinander unterschiedliche Luftfahrzeugkonfiguration einnehmen kann, wobei in der ersten Luftfahrzeugkonfiguration das mindestens eine gebremste Rad (3a) an der ersten Achse (3) und das mindestens eine motorisierte Rad (4a) an der zweiten Achse (4) gleichzeitig mit einer Lauffläche (P) in Kontakt stehen, um das Rollen des Luftfahrzeugs zu ermöglichen, wobei in der zweiten Luftfahrzeugkonfiguration (2) das mindestens eine gebremste Rad (3a) an der ersten Achse (3) mit einer Lauffläche (P) in Kontakt steht, während das mindestens eine motorisierte Rad (4a) an der zweiten Achse (4) von dieser Lauffläche (P) entfernt ist, wobei der Übergang von einer dieser Luftfahrzeugkonfigurationen zur anderen dieser Luftfahrzeugkonfigurationen durch Betätigung des ersten Stellglieds (5) erfolgt.

## Claims

1. Landing gear (1) for an aircraft (2) having an upper portion (1a) intended to be joined to a structure (2a) of the aircraft (2) and a lower portion (1b) provided with a first and a second axle (3, 4), the first axle (3) being provided with at least one braked wheel (3a) and the second axle (4) being provided with at least one motorised wheel (4a), the landing gear (1) comprises a first actuator (5) arranged to move one of the axles (4) between remote and close positions with respect to the upper portion (1a) independently from the other of the axles (3) such that, in one of said positions, the wheels (3a, 4a) can be simultaneously in contact with a running surface (P) while in the other of said positions, each wheel (3a) on the first axle (3) is in contact with the running surface (P) while each wheel (4a) on the second axle (4) remains at a distance from this running surface (P), the landing gear comprising a strut (10) having an upper end belonging to the upper portion (1a) of the landing gear (1) and a lower end belonging to the lower portion (1b) of the landing gear and an operating arm (40), this operating arm (40) being pivotably mounted with respect to the strut (10), said second axle (4) provided with the motorised wheel (4a) being fixed on this operating arm (40) at a distance from the strut (10), the first actuator (5) being, on the one hand, connected to the strut (10) and, on the other hand, connected to said operating arm (40) to pivot this operating arm (40) with respect to the strut (10) and thus move the second axle between its remote position with respect to the upper portion (1a) and its close position with respect to the upper portion (1a), **characterised in that** the first actuator (5) comprises a first damper (51) interposed between the operating arm (40) and to the strut (10) so as to dampen a pivot movement of the operating arm (40) with respect to the strut (10), the aircraft landing gear further comprising a main arm (30) pivotably mounted with respect to the strut (10), said first axle (3) provided with the braked wheel (3a) being fixed to this main arm (30) at a distance from the strut (10), a main damper (6) being, on the one hand, connected to the strut (10) and, on the other hand, connected to said main arm (30) to dampen a pivot movement of this main arm (30) with respect to the strut (10) and thus dampen movements of the first axle (3) with respect to the strut (10).

2. Aircraft landing gear according to claim 1, wherein the first actuator (5) comprises a telescopic jack (52) of variable length to make the orientation of the operating arm (40) vary with respect to the strut (10).

3. Aircraft landing gear according to claim 2, wherein the first actuator (5) comprises a locking system (53) selectively adopting a locked configuration and an unlocked configuration, in its locked configuration, the telescopic jack (52) of the first actuator (5) is blocked to keep the second axle (4) in its close position with respect to said upper portion (1a) of the landing gear and in its unlocked configuration, the telescopic jack (52) being released to be able to move the second axle (4) between its close position with respect to the upper portion (1a) of the landing gear and its remote position with respect to said upper portion (1a) of the landing gear.

4. Aircraft landing gear according to claim 3, wherein the locking system (53) is arranged to pass from its locked configuration to its unlocked configuration in response to an unlocking control.

5. Aircraft landing gear according to any one of claims 3 or 4, wherein the locking system (53) comprises claws (531) and a sliding ring (532) with respect to a body (520) of the telescopic jack (52) between a position for blocking the claws (531) and a position for releasing the claws (531), the locking system (53) being arranged such that:
when it is in the locked configuration, the sliding ring (532) is thus in its position for blocking the claws (531) where it catches the end portions of the claws (531) in a zone for receiving these ends of claws such that the claws thus caught oppose any variation in length of the telescopic jack (52); and such that
when it is in the unlocked configuration, the sliding ring (532) is thus in its position for releasing the claws (531) and the end portions of the claws (531) being free to be distanced from said zone for receiving the ends of claws so as to enable a variation in length of the telescopic jack (52).

6. Aircraft landing gear according to any one of claims 3 or 4, wherein the locking system (53) comprises segments slidingly mounted transversally with respect to the body of the actuator (520) and a movable part with respect to the body (520) of the telescopic jack (52) between a position for blocking the segments and a position for releasing the segments, the locking system (53) being arranged such that:
when it is in the locked configuration, the movable part is thus in its position for blocking the segments where it pushes end portions of the segments in a zone for receiving these segment ends, such that the segments thus pushed oppose any variation in length of the telescopic jack (52); and such that
when it is in the unlocked configuration, the movable part with respect to the body is thus in its position for releasing segments and the end portions of the segments being free to be distanced from said zone for receiving segment ends so as to enable a variation in length of the telescopic jack (52).

7. Aircraft landing gear according to any one of claims 2 to 6, wherein the telescopic jack (52) of the first actuator is a hydraulic cylinder provided with a first port (521) for the passage of hydraulic fluid, the length of this jack (52) being variable according to a volume of hydraulic fluid taken into this actuator (52) via this first port (521) for the passage of hydraulic fluid.

8. Aircraft landing gear according to claim 7, wherein the telescopic jack (52) of the first actuator (5) comprises a first jack rod (52a) and a first cylinder (52b), the first jack rod (52a) being sealingly slidingly mounted in this first cylinder (52b) so as to define a main chamber (523) in which said first port for the passage (521) of hydraulic fluid leads.

9. Aircraft landing gear according to claim 8, wherein the first jack rod (52a) and the first cylinder (52b) together define a secondary chamber (524) in which a second port for the passage (522) of hydraulic fluid leads, this telescopic hydraulic jack (52) of the first actuator (5) being a double-acting cylinder of variable length between a minimum length and a maximum length.

10. Landing gear according to any one of claims 1 to 9, wherein the first axle (3) is a rear axle and the second axle (4) is a front axle with respect to a direction (S) of usual movement of the aircraft (2).

11. Aircraft (2) comprising at least one landing gear (1) according to any one of claims 1 to 10, wherein the aircraft (2) is arranged to selectively adopt first and second aircraft configurations, distinct from one another, in the first aircraft configuration, said at least one braked wheel (3a) on the first axle (3) and said at least one motorised wheel (4a) on said second axle (4) being simultaneously in contact with a running surface (P) to enable the taxiing of the aircraft, in the second aircraft configuration (2) said at least one braked wheel (3a) on the first axle (3) is in contact with a running surface (P) while said at least one motorised wheel (4a) on said second axle (4) is distanced from this running surface (P), the passage from one of these aircraft configurations to the other of these aircraft configurations being done by actuation of said first actuator (5).
